# EUROPÄISCHE PATENTSCHRIFT

(11) **EP 1 906 505 B1**
(45) Veröffentlichungstag und Bekanntmachung des Hinweises auf die Patenterteilung: **17.01.2018**
(21) Anmeldenummer: 07116884.3
(22) Anmeldetag: 20.09.2007
(51) Int. Cl.: H02J 3/18

(54) **Umrichter und Steuerverfahren für einen Umrichter**
Converter and control method for a converter
Convertisseur et procédé de commande d'un convertisseur

(30) Priorität: 23.09.2006 DE 102006044931; 20.04.2007 DE 102007018683
(43) Veröffentlichungstag der Anmeldung: 02.04.2008
(73) Patentinhaber: KACO new energy GmbH, 74172 Neckarsulm (DE)
(72) Erfinder: Kerber, Georg, 80686 München (DE)
(74) Vertreter: Patentanwälte Ruff, Wilhelm, Beier, Dauster & Partner mbB

(56) Entgegenhaltungen:
- EP-A- 1 643 609
- WO-A-00/73652
- WO-A-97/45908
- WO-A-02/086315
- WO-A-2005/117136
- WO-A-2007/031357
- DE-A1- 19 961 705

## Beschreibung

Die Erfindung betrifft einen Umrichter für den Austausch von Energie zwischen einem Versorgernetz und einer Endstelle mit:
- netzseitigen Anschlüssen und endstellenseitigen Anschlüssen;
- einer zwischen den netzseitigen Anschlüssen und den endstellenseitigen Anschlüssen geschalteten Wandlereinheit, durch die Wirkleistung oder Blindleistung in das Versorgernetz abgebbar oder beziehbar ist; und
- einer die Wandlereinheit in Abhängigkeit von der Netzspannung steuernden Steuereinheit, durch die ein Sollzusammenhang zwischen Netzspannung und Blindleistung in Abhängigkeit von einer Netzimpedanz des Versorgernetzes einstellbar ist.

Die Erfindung betrifft ferner ein Steuerverfahren für einen zwischen einem Versorgernetz und einer Endstelle geschalteten Umrichter, bei dem der Bezug oder die Abgabe von Wirkleistung oder Blindleistung in Abhängigkeit von der Netzspannung durch eine Steuereinheit gesteuert wird, von der eine zwischen Versorgernetz und Endstelle geschaltete Wandlereinheit unter Berücksichtigung eines von einer Netzimpedanz des Versorgernetzes abhängigen Sollzusammenhangs zwischen Netzspannung und Blindleistung mit Steuersignalen beaufschlagt wird.

Ein derartiger Umrichter und ein derartiges Steuerverfahren sind aus der DE 199 61 705 B4 bekannt. Mit dem bekannten Umrichter lässt sich dezentral Energie in ein Energieversorgernetz einspeisen. Das Energieversorgernetz wird nachfolgend kurz Versorgernetz genannt. Insbesondere weist der Umrichter eine Steuereinheit auf, die die Spannung an einem Verknüpfungspunkt mit dem Versorgernetz überwacht. Die Steuereinheit ist dazu eingerichtet, bestimmte spektrale Komponenten des Spannungsspektrums auf Sollwerte zu regeln. Für die einzelnen Frequenzkomponenten berücksichtigt die Steuereinheit einen linearen Sollzusammenhang zwischen Blindstrom und Netzspannung. Die Steigung der Kennlinie, die den linearen Sollzusammenhang zwischen Blindstrom und Netzspannung beschreibt, ist dabei von der Netzimpedanz am Verknüpfungspunkt abhängig.

Derartige Umrichter dienen der autonomen Leistungsregelung von verteilten Einspeiseanlagen in das elektrische Energieversorgernetz. Die häufigste Anwendung von verteilten Einspeiseanlagen mit Umrichtern in das Versorgernetz sind derzeit Photovoltaikanlagen. Bei einer Einspeisung von elektrischer Energie in das Versorgernetz kommt es abhängig von der Einspeiseleistung und der Netzkapazität irgendwann zu einer Überlastung des Netzes. Diese Überlastung wird zum einen durch zu große Ströme bewirkt, die zu einer Überlastung der Betriebsmittel, zum Beispiel Kabel oder Trafos, führen. Zum anderen beruht die Überlastung auf Überschreitungen der höchstzulässigen Netzspannungen oder Spannungsschwankungen im Netz.

Eine Reduktion der Netzspannung kann durch verschiedene Maßnahmen erreicht werden. Zum einen kann die Netzimpedanz reduziert werden. Dies geschieht meist durch eine Neuverlegung von Kabeln oder Leitungen und ist sehr aufwändig und teuer. Diese Maßnahme soll daher erst zuletzt getroffen werden.

Ferner ist es möglich, die eingespeiste Wirkleistung zu reduzieren. Beispielsweise kann die Einspeiseleistung des Umrichters bei Erreichen der maximalen Spannung gedrosselt werden. Dies ist jedoch nicht erwünscht, da die elektrische Energie dann verloren geht. Da die durch Photovoltaikanlagen verursachten Spannungsspitzen oft nur kurzzeitig sind und daher zu Beginn nur wenig Energie verloren geht, kann diese Maßnahme aber für den Ausgleich kurzer Spannungsspitzen in Betracht gezogen werden.

Die dritte Möglichkeit ist schließlich der Bezug induktiver Blindleistung. Während der Umrichter Wirkleistung in das Versorgernetz einspeist, kann er dennoch induktive Blindleistung beziehen. Dies führt zu einem Spannungsabfall, der dem Spannungsanstieg aufgrund der Einspeise- und der Wirkleistung entgegenwirkt und die Spannungsanhebung verringert. Aufgrund der aktuellen Dimensionierung der Umrichter kann von dieser Möglichkeit nur bei Einspeiseleistung kleiner der Umrichternennleistung Gebrauch gemacht werden, da die Halbleiterbauelemente des Umrichters auf den maximalen Strom dimensioniert sind, der mit der Scheinleistung verknüpft ist, die sich durch den Blindleistungsverbrauch erhöht. Durch die Verwendung von leistungsstärkeren Umrichtern kann dieses Problem behoben werden.

Besondere Schwierigkeiten bei einem Einsatz der bekannten Umrichter am Versorgernetz bereitet das Zusammenspiel einer Vielzahl dieser Umrichter. Es muss verhindert werden, dass die Umrichter unnötig regeln oder interferieren. Dazu kann keine einfache Spannungsregelung verwendet werden, da bei mehreren Einspeiseanlagen an einer Leitung die Einspeiseanlage am Leitungsende immer die höchste Spannung sieht und so lange regelt, bis sie keine Leistung mehr einspeist und nur den lokalen Verbrauch deckt. Dann erst beginnt die zweite Anlage sich an der Spannungsregelung zu beteiligen. Diese einseitige Belastung ist nicht akzeptabel.

Als Lösung für diese Probleme wird meist eine Kommunikation zwischen den Einspeiseanlagen vorgeschlagen. Beispiele hierfür sind Untersuchungen zu so genannten virtuellen Kraftwerken oder Untersuchungen zu Inselnetzen mit einem hohen Anteil regenerativer Erzeuger, wie sie beispielsweise in BÜHNER, Volker: "Anforderungen an dezentrale Einspeiser bezüglich der Betriebsführung in "virtuellen Kraftwerken"", VDI-Berichte, Nr. 1929, 2006 beschrieben sind. Die dazu nötige Kommunikation zwischen den Einspeiseanlagen ist jedoch mit einem erhöhten Aufwand verbunden und steigert die Komplexität des Gesamtsystems.

Ein Eingreifen von übergeordneter Stelle (Netzleitwarte), wie sie zum Beispiel für ähnliche Zwecke bei neuen, vom Netzbetreiber beeinflussbaren Windenergieanlagen eingesetzt wird, erfordert ebenfalls eine Kommunikation zwischen den Einspeiseanlagen und der Netzleitwarte und ist daher für eine Vielzahl von kleinen Photovoltaikanlagen zu teuer. Zudem wird sich der Netzbetreiber nicht leittechnisch um eine solche Vielzahl von kleinen Photovoltaikanlagen kümmern können.

Eine weitere Möglichkeit ist in der Druckschrift WO02/086315 beschrieben, die eine Spannungsregelung einer Windenergieanlage nach dem Oberbegriff des Anspruchs 1 bzw. 12 offenbart. Ausgehend von diesem Stand der Technik liegt der Erfindung daher die Aufgabe zugrunde, einen Umrichter sowie ein Steuerverfahren für einen Umrichter anzugeben, mit denen eine autonome, stabile und zuverlässige Aussteuerung von Spannungsschwankungen möglich ist.

Diese Aufgabe wird durch den Umrichter und das Steuerverfahren gemäß den unabhängigen Ansprüchen gelöst. In davon abhängigen Ansprüchen sind vorteilhafte Ausgestaltungen und Weiterbildungen angegeben.

Bei dem Umrichter weist der von der Steuereinheit berücksichtigte Sollzusammenhang zwischen Netzspannung und Wirkleistung oder Blindleistung um eine Nennspannung einen mittleren Spannungsbereich auf, in dem die Zunahme der bezogenen oder eingespeisten Blindleistung pro betragsmäßiger Zunahme der Spannungsabweichung von der Nennspannung kleiner ist als außerhalb des mittleren Spannungsbereichs. Die Ausdehnung des mittleren Spannungsbereichs hängt dabei von der Netzimpedanz ab. Dadurch wird zum einen verhindert, dass die Umrichter auch bei kleinen Netzspannungen regeln. Da die Ausdehnung des Bereichs, in dem im Wesentlichen keine Regelung stattfindet, in Abhängigkeit von der Impedanz eingestellt werden kann, ist beim Einsatz von mehreren Umrichtern an einer Leitung eine gleichmäßige Belastung der Umrichter mit der Kompensationsleistung möglich.

Bei einer bevorzugten Ausführungsform des Umrichters weist der von der Steuereinheit berücksichtigte Sollzusammenhang zwischen Netzspannung und Wirkleistung oder Blindleistung einen Bereich ohne Einflussnahme auf, dessen Grenzen von der Netzimpedanz abhängen. Bei dieser Ausführungsform ist der Sollwert der Wirkleistung oder Blindleistung besonders einfach bestimmbar.

Bei einer weiteren bevorzugten Ausführungsform ist der mittlere Spannungsbereich umso größer, je kleiner die vom Umrichter gesehene Netzimpedanz ist. Auf diese Weise werden unnötige Regelvorgänge bei kleineren Schwankungen der Netzspannung unterbunden. Derartige Regelvorgänge würden zu einer unnötigen Vergrößerung der über das Versorgernetz fließenden Blindleistung führen und daher die Netzverluste vergrößern.

Vorzugsweise handelt es sich bei dem Umrichter um einen Umrichter, der für die Übertragung von Energie von einem Energieerzeuger in ein Versorgernetz eingerichtet ist. Dabei wird von dem Umrichter Wirkleistung in das Versorgernetz abgegeben und Blindleistung aus dem Versorgernetz abgegeben oder bezogen. Bei derartigen Umrichtern kann es aufgrund der dezentralen Energieeinspeisung zur Netzüberlastung kommen, weshalb Umrichter, die selbsttätig zu Stabilisierung der Netzspannung beitragen besonders von Vorteil sind.

Derartige Umrichter können jedoch auch bei Anwendungen eingesetzt werden, in denen mithilfe des Umrichters Wirkleistung aus dem Versorgernetz bezogen wird und Blindleistung aus dem Versorgernetz bezogen oder in das Versorgernetz abgegeben wird.

Vorzugsweise ist die Impedanz des Versorgernetzes durch die Umrichter selbsttätig messbar. Ein derartiger Umrichter kann sich selbsttätig an die jeweilige Netzumgebung anpassen.

Weiterhin ist der Sollzusammenhang zwischen Netzspannung und Wirkleistung oder Blindleistung vorzugsweise in Abhängigkeit vom Betrag der Netzimpedanz einstellbar. Über den Betrag der Netzimpedanz kann auf einfache Weise der Abstand des Umrichters zur Niederspannungsammelschiene bestimmt werden.

Weitere Eigenschaften und Vorteile der Erfindung gehen aus der nachfolgenden Beschreibung hervor, in der Ausführungsbeispiele der Erfindung anhand der beigefügten Zeichnung im Einzelnen erläutert werden. Es zeigen:
- Figur 1: eine Darstellung der Spannungsschwankungen in einem Niederspannungsnetz bei wechselndem Verbrauch und wechselnder Einspeisung;
- Figur 2: ein Ersatzschaltbild einer einzelnen Leitung mit Zeigerdiagramm;
- Figur 3: die Darstellung eines Spannungsprofils auf einer Niederspannungsleitung, in die zwei Photovoltaik-Umrichter Energie einspeisen;
- Figur 4: ein Beispiel einer Regelkennlinie für die Blindleistung eines Umrichters;
- Figur 5: die Darstellung einer möglichen Variation der Kennlinie aus Figur 4 bei verschiedenen Photovoltaik-Umrichtern;
- Figur 6: eine Darstellung der Blindlastverteilung entlang einer Niederspannungsleitung an die eine Vielzahl von Umrichtern angeschlossen ist; und
- Figur 7: ein Blockschaltbild eines Umrichters.

Im Folgenden wird die Erfindung am Beispiel eines Photovoltaik-Wechselrichters erläutert. Die Erfindung ist aber grundsätzlich auch auf alle anderen Einspeiseanlagen mit Umrichtern anwendbar, zum Beispiel Brennstoffzellen oder Blockheizkraftwerke.

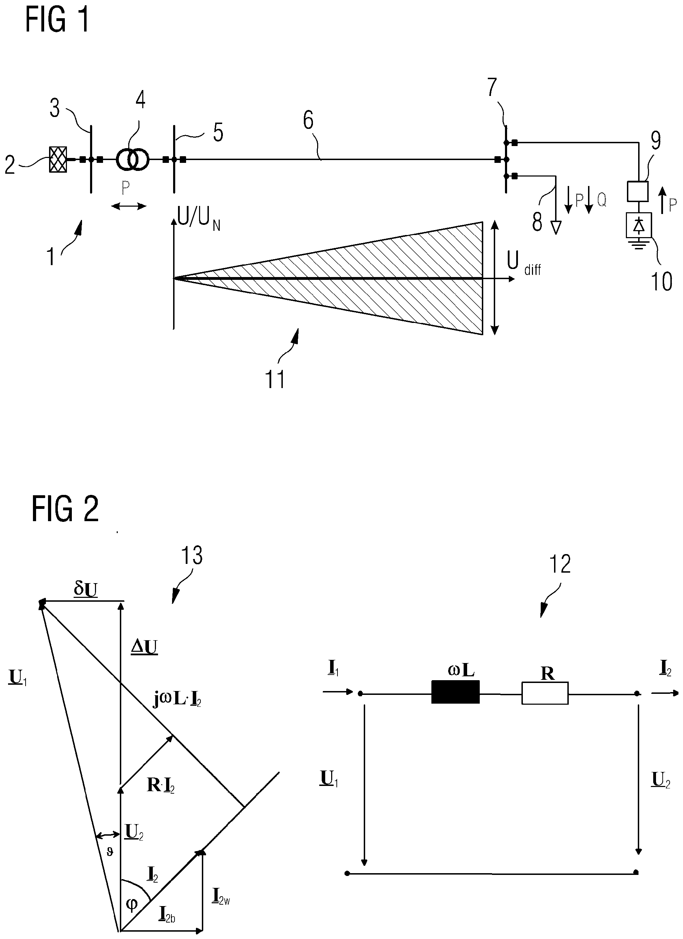

Figur 1 zeigt eine Versorgernetz 1, das in Figur 1 durch ein Mittelspannungsnetz 2, eine Mittelspannungssammelschiene 3, einen Trafo 4 und eine Niederspannungssammelschiene 5 angedeutet ist. An die Niederspannungssammelschiene 5 ist eine Niederspannungsleitung 6 angeschlossen, die zu einem Hausanschluss 7 führt. An den Hausanschluss 7 ist eine Last 8 angeschlossen, durch die Wirkleistung P und Blindleistung Q aus dem Versorgernetz 1 bezogen wird. Über einen Umrichter 9 ist ferner eine Photovoltaikanlage 10 an den Hausanschluss 7 angeschlossen. Die Photovoltaikanlage 10 speist insbesondere Wirkleistung P in das Versorgernetz ein. Die durch das Einspeisen von Wirkleistung in die Niederspannungsleitung 6 verursachten Spannungsschwankungen sind in Figur 1 durch ein entlang der Niederspannungsleitung 6 aufgetragenes Spannungsdiagramm 11 veranschaulicht. Die Spannungsschwankungen U_{diff} sind bezogen auf das an der Niederspannungssammelschiene 5 herrschende Potential am Hausanschluss 7 am größten und fallen dann entlang der Niederspannungsleitung 6 zur Niederspannungssammelschiene 5 hin ab.

Die maximale Amplitude der Spannungsschwankungen U_{diff} ist unter Vernachlässigung der von der Last 8 bezogenen Wirk- und Blindleistung abhängig von der vom Umrichter 9 eingespeisten Wirk- und Blindleistung sowie von der Impedanz der Niederspannungsleitung 6, was anhand von Figur 2 näher veranschaulicht ist.

Figur 2 zeigt ein Ersatzschaltbild 12 für die Niederspannungsleitung 6. Gemäß dem Ersatzschaltbild 12 weist die Niederspannungsleitung 6 einen ohmschen Widerstand R und eine Induktivität ωL auf. Bei Einspeisung eines Wechselstromsignals U₁ erscheint am Ende der Niederspannungsleitung 6 ein Spannungssignal U₂. Die Ausgangsspannung U₂ lässt sich dabei gemäß dem Zeigerdiagramm 13 konstruieren. Insbesondere ist die Eingangsspannung U₁ gleich der Summe der Ausgangsspannung U₂ der über dem ohmschen Widerstand abfallenden Spannung R*I₂ sowie der an der Induktivität ωL abfallenden Spannung jωL*I₂. Dabei sei angemerkt, dass herkömmliche Umrichter nur Wirkleistung (cos(ϕ=1)) in das Versorgernetz 1 einspeisen, da nur diese vergütet wird.

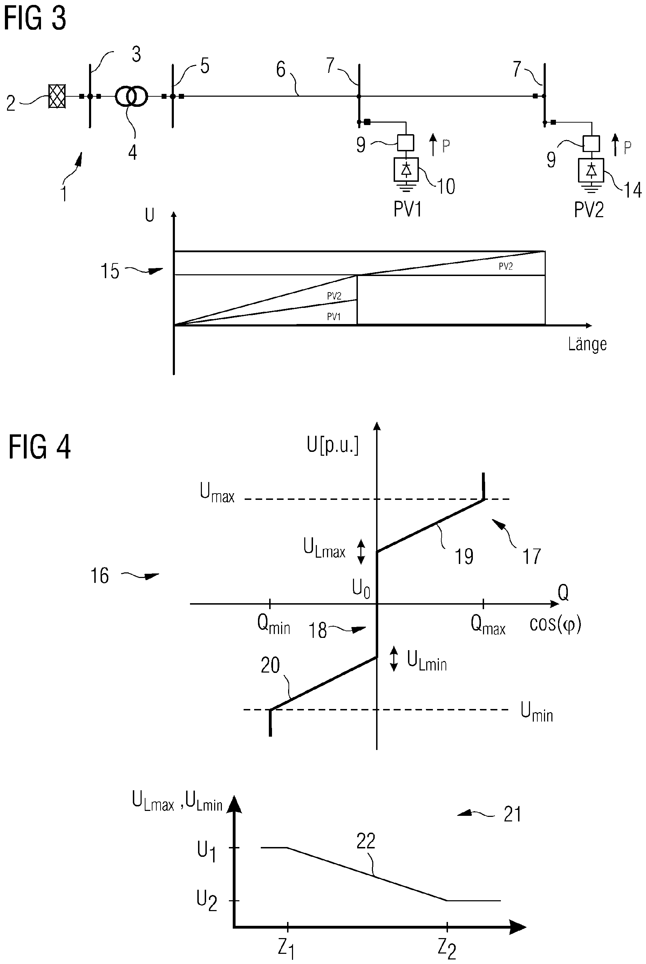

In Figur 3 ist nun der Fall dargestellt, dass an die Niederspannungsleitung 6 neben der Photovoltaikanlage 10 eine weitere Photovoltaikanlage 14 vorhanden ist, die beide über die Umrichter 9 an die Niederspannungsleitung 6 angeschlossen sind. Falls die Umrichter 9 für die Photovoltaikanlagen 10 und 14 jeweils das gleiche Regelverhalten zeigen, ergibt sich das in Figur 3 entlang der Niederspannungsleitung 6 aufgetragene Spannungsdiagramm 15, gemäß dem der der Photovoltaikanlage 14 zugeordnete Umrichter 9 eine wesentlich größere Spannungsschwankung kompensieren muss als der der Photovoltaikanlage 10 zugeordnete Umrichter 9.

Für die Regelung der vom Umrichter 9 in das Versorgernetz 1 eingespeisten Blindleistung wird daher das in Figur 4 dargestellte Kennliniendiagramm 16 verwendet. Die Regelung erfolgt insbesondere gemäß einer Kennlinie 17, die innerhalb der unteren Spannungsgrenze U_{Lmin} und der oberen Spannungsgrenze U_{Lmax} ein auf die Nennspannung U₀ zentrierten Bereich 18 ohne Einflussnahme aufweist. An den Bereich 18 ohne Einflussnahme schließen sich jeweils lineare Kennlinienabschnitte 19 und 20 an. Der lineare Kennlinienabschnitt 19 erstreckt sich hinsichtlich der Spannung zwischen der oberen Spannungsgrenze U_{Lmax} bis zu einer maximalen Grenzspannung Uₘₐₓ und bezüglich der Blindleistung von 0 bis zu einer maximalen Blindleistung Qₘₐₓ. Der lineare Kennlinienabschnitt 20 erstreckt sich dagegen von der unteren Spannungsgrenze U_{Lmin} bis zu einer Minimalspannung Uₘᵢₙ und hinsichtlich der Blindleistung von 0 bis zu einer minimalen Blindleistung Qₘᵢₙ.

Die Maximalspannung Uₘₐₓ, die Minimalspannung Uₘᵢₙ, die maximale Blindleistung Qₘₐₓ und die minimale Blindleistung Qₘᵢₙ wird in der Regel festgehalten, während die Spannungsgrenzen U_{Lmax} und U_{Lmin} gemäß einem in Figur 4 dargestellten Kennliniendiagramm 21, das eine Spannungsgrenzenkennlinie 22 enthält, eingestellt werden. Insbesondere wird die obere Spannungsgrenze U_{Lmax} und die untere Spannungsgrenze U_{Lmin} betragsmäßig umso größer eingestellt, je kleiner der Betrag der vom Umrichter 9 gesehenen Impedanz des Versorgernetzes 1 ist. Anstelle des Betrages der Impedanz kann auch der Realteil oder Imaginärteil der Impedanz zur Einstellung der Spannungsgrenzen U_{Lmax} und U_{Lmin} verwendet werden.

Es sei angemerkt, dass im Falle des rechten oberen Quadranten des Kennliniendiagramms 16 induktive Blindleistung aus dem Versorgernetz 1 bezogen wird, um die Netzspannung abzusenken. Im Fall des linken unteren Quadranten des Kennliniendiagramms 16 wird dagegen kapazitive Blindleistung in das Versorgernetz 1 eingespeist, um die Netzspannung anzuheben.

Ferner sei angemerkt, dass der Bereich 18 ohne Einflussnahme nicht notwendigerweise auf die Nennspannung U₀ zentriert sein muss. Überhaupt ist es nicht zwingend erforderlich, dass die Kennlinie 17 einen punktsymmetrischen Verlauf aufweist. Vielmehr kann die Kennlinie 17 auch im Bereich 18 eine von Unendlich abweichende Steigung aufweisen, solange die Steigung im Bereich 18 größer als die Steigung in den Kennlinienabschnitten 19 und 20 ist. Schließlich ist auch eine gekrümmte Kennlinie einsetzbar, die nahe der Nennspannung U₀ eine große Steigung aufweist, die zu der Maximalspannung Uₘₐₓ und der Minimalspannung Uₘᵢₙ hin abnimmt. Auch in diesem Fall würde der zentrale Bereich der Kennlinie in Abhängigkeit von der Netzimpedanz Z variiert werden, damit im Bereich der immer vorhandenen Netzspannungsschwankungen die Beeinflussung des Versorgernetzes 1 durch die Umrichter minimal ist und nur große Störungen korrigiert werden.

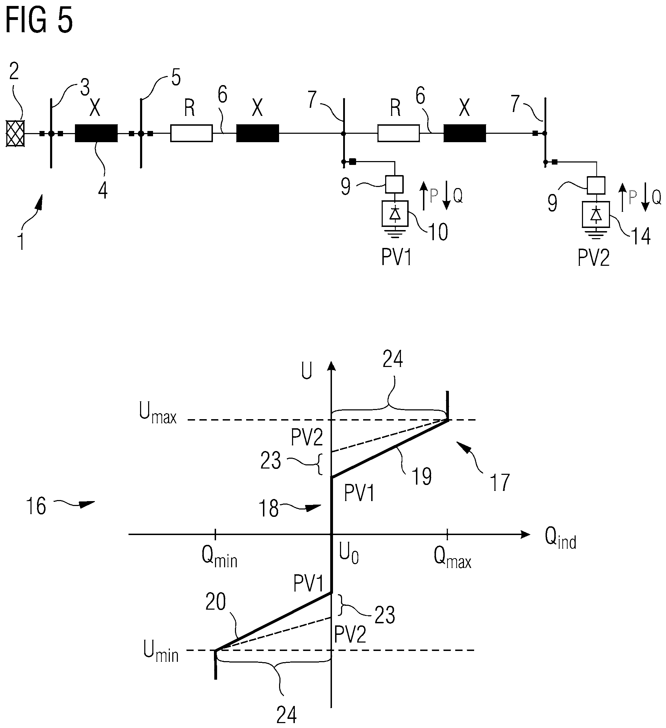

In Figur 5 ist die Einstellung der Regelkennlinie bei verschiedenen Umrichtern 9 entlang der Niederspannungsleitung 6 dargestellt. Da der der Photovoltaikanlage 14 zugeordnete Umrichter 9 eine größere Impedanz des Versorgernetzes 1 sieht, ist der Bereich ohne Einflussnahme 18 bei der zugeordneten Kennlinie 17 um eine Differenz 23 verkleinert. Da beide Umrichter 9 die gleiche Nennleistung aufweisen, bleibt ein von der minimalen Blindleistung Qₘᵢₙ und der maximalen Blindleistung Qₘₐₓ begrenzter Blindleistungsregelbereich 24 unverändert. Im Ergebnis weist die Kennlinie 17 des der Photovoltaikanlage 14 zugeordneten Umrichters 9 steilere lineare Abschnitte 19 und 20 auf als die Kennlinie 17 des der Photovoltaikanlage 10 zugeordneten Umrichters 9.

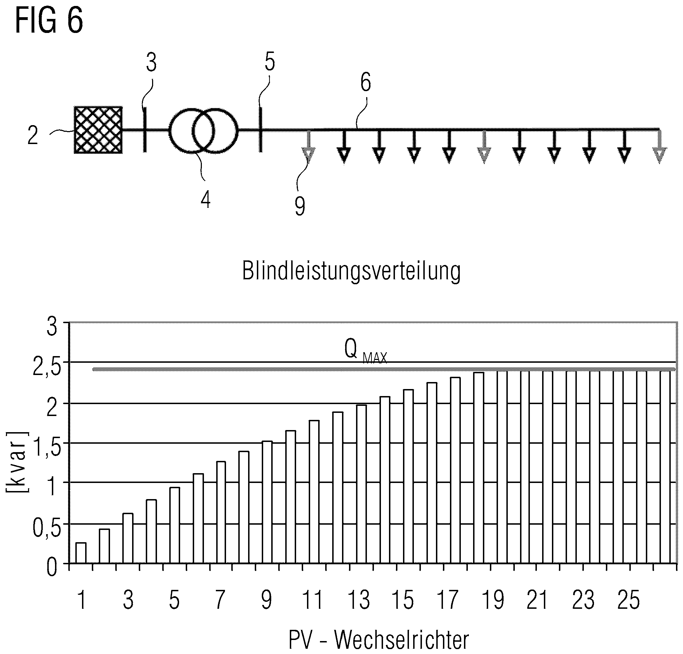

In Figur 6 ist der Fall dargestellt, dass eine Vielzahl von Umrichtern 9 entlang der Niederspannungsleitung 6 angeordnet ist. Dabei ergibt sich die in Figur 4 dargestellte beispielhafte Blindleistungsverteilung. Gemäß dieser Blindleistungsverteilung steigt die von den jeweiligen Umrichtern 9 bezogene Blindleistung ausgehend von der Niederspannungssammelschiene 5 zunächst an, um sich dann der maximalen Blindleistung Qₘₐₓ zu nähern. Bei einer Spannungsüberhöhung beginnt zunächst derjenige Umrichter 9, der am weitesten entfernt von der Niederspannungssammelschiene 5 ist, Blindleistung aus dem Versorgernetz 1 zu beziehen, um die Netzspannung abzusenken. Falls die Netzspannung weiter ansteigt, werden weitere Umrichter 9 aktiviert, wobei sich der Aktivierungsvorgang von demjenigen Ende der Niederspannungsleitung 6, das am weitesten entfernt von der Niederspannungssammelschiene 5 ist, zu dem Ende der Niederspannungsleitung 6 hin fortpflanzt, das der Niederspannungssammelschiene 5 am nächsten liegt.

Diese Vorgehensweise bietet den Vorteil, dass große Netzspannungsschwankungen unter weitgehend gleichmäßiger Belastung der Umrichter 9 ausgeregelt werden können, ohne dass bei kleinen Schwankungen der Netzspannung unnötig Blindleistung mit dem Versorgernetz ausgetauscht wird, was zu einer Vergrö-ßerung der Netzverluste führen würde. Da die Spannungsabsenkung bei Umrichtern 9, die von der Niederspannungsschiene 5 weit entfernt sind, besonders effektiv ist, wird durch die hier beschriebene Vorgehensweise die benötigte Blindleistung weitgehend minimiert und die Last gleichmäßig verteilt.

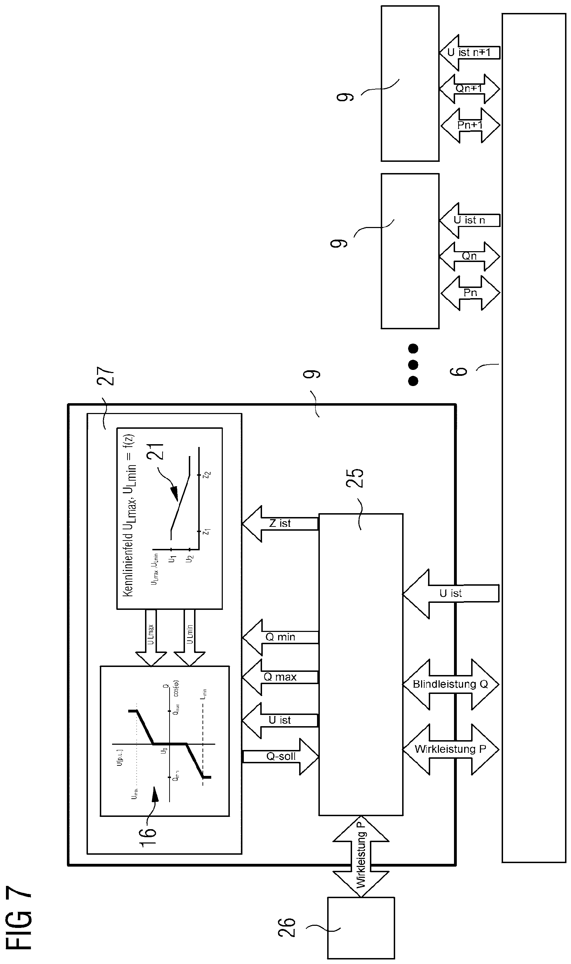

In Figur 7 ist schließlich ein Blockschaltbild des Umrichters 9 dargestellt. Der Umrichter 9 umfasst insbesondere eine Wandlereinheit 25, die Wirkleistung P und Blindleistung Q in die Niederspannungsleitung 6 abgibt und von dort bezieht. Ferner erfasst die Wandlereinheit 25 die aktuelle Spannung Uᵢₛₜ auf der Niederspannungsleitung 6. Ferner tauscht die Wandlereinheit 25 mit einer Endstelle 26 Wirkleistung P aus oder bezieht Wirkleistung P von der Endstelle 26. Bei der Endstelle 26 kann es sich beispielsweise um die Photovoltaikanlage 10 oder 14 handeln. Daneben wirkt die Wandlereinheit 25 noch mit einer Steuereinheit 27 zusammen. Insbesondere teilt die Wandlereinheit 25 der Steuereinheit 27 die aktuelle Leitungsimpedanz Zᵢₛₜ mit. Die Steuereinheit 27 ermittelt dann anhand der vorgegebenen Grenzspannungskennlinie 22 die obere Spannungsgrenze U_{Lmax} und die untere Grenzspannung U_{Lmin}. Schließlich teilt die Wandlereinheit 25 der Steuereinheit 27 noch die mögliche maximale Blindleistung Qₘₐₓ und die minimale Blindleistung Qₘᵢₙ sowie die aktuelle Spannung Uᵢₛₜ mit. Anhand der Kennlinie 17 ermittelt die Steuereinheit 27 dann den Blindleistungssollwert Qₛₒₗₗ.

Es sei angemerkt, dass zur Implementierung der hier beschriebenen Regelung der Blindleistung Q in aktuellen Umrichtern nur eine Veränderung der Programmierung der Umrichter nötig ist. Insbesondere sind keine Veränderungen an der Hardware erforderlich, da es sich in der Regel um selbstgeführte Vierquadranten-Umrichter handelt, die die Möglichkeit zum Bezug von Blindleistung bieten. Die Nennleistung des Umrichters ist immer bekannt und kann daher dem Umrichter mit der Programmierung übermittelt werden. Den Einfluss, den diese Nennleistung auf die Netzspannung hat, kann durch eine Messung der Netzimpedanz ermittelt werden. Diese Messung ist bei vielen handelsüblichen Umrichtern aus Gründen des Kurzschlussschutzes in Einrichtungen zur Netzüberwachung mit zugeordneten Schaltorganen (= ENS) schon integriert und kann daher für diesen Zweck direkt verwendet werden.

Somit kann die Anpassung des Umrichters 9 an das Versorgernetz vollautomatisch vom Umrichter 9 selbst vorgenommen werden, so dass sich der Umrichter 9 auch selbsttätig an veränderte Netzzustände, die beispielsweise durch Schalthandlungen hervorgerufen werden, anpasst. Weitere Schutzfunktionen oder Ähnliches werden dabei nicht beeinträchtigt.

Ferner sei angemerkt, dass anstelle eines einfachen Regelkreises auch Regelkonzepte zum Einsatz kommen können, die sich neuronaler Netze oder Fuzzy-Logik bedienen. Wesentlich ist lediglich, dass im Ergebnis, die Regelung der Umrichter 9 erst bei erheblichen Spannungsschwankungen einsetzt und dass die Grenze, bei der die Regelung einsetzt, in Abhängigkeit von der Netzimpedanz eingestellt wird.

Schließlich sei angemerkt, dass das hier beschrieben Regelungsverfahren auch für verschiedene Frequenzkomponenten eines Spannungsspektrums angewendet werden kann.

Das Verfahren kann für Wirk- und Blindleistungsregelung gleichermaßen verwendet werden. Ebenso ist eine Kombination von Wirk- und Blindleistungsregelung möglich. Durch die Netzimpedanzmessung kann das Optimum von beiden Komponenten im Zusammenspiel miteinander bestimmt werden. Das Verfahren ist ebenso für Verbraucher oder Konzepte zur Spannungsanhebung verwendbar und daher sehr vielfältig einsetzbar.

Die mit dem hier beschriebenen Umrichtern und Steuerverfahren verknüpften Vorteile seien abschließend nochmals hervorgehoben:
Die Regelung beeinflusst die Wirk- und Blindleistung des Umrichters 9 um primär die maximale Netzspannung zu begrenzen. Anhand von Kennlinien wird schon vor dem Erreichen der maximalen Spannung ein Beitrag zur Spannungsbegrenzung geleistet. So wird vermieden, dass sich nur der letzte Umrichter einer Leitung an der Regelung beteiligt.

Das hier beschriebene Konzept eines Regelverfahrens kann auf eine Vielzahl unabhängiger Kleinanlagen im Energieversorgernetz angewendet werden, ohne dass eine gesonderte Kommunikation zwischen den Kleinanlagen untereinander oder mit einer Netzleitwarte stattfinden muss.

Die Anpassung an das Versorgernetz 1 findet dabei autonom statt. Die Netzspannung im Versorgernetz 1 wird stabilisiert, wobei die Regelbelastung auf alle Kleinanlagen im Netzstrang verteilt wird.

Hervorzuheben ist, dass das Regelverfahren mit handelsüblichen selbstgeführten Umrichtern realisierbar ist, da diese durch eine Aktualisierung der Betriebssoftware nachrüstbar sind. Insofern ist das Regelungsverfahren besonders kostengünstig und führt zu einer Reduktion von Netzausbaukosten.

Abschließend sei darauf hingewiesen, dass Merkmale und Eigenschaften, die im Zusammenhang mit einem bestimmten Ausführungsbeispiel beschrieben worden sind, auch mit einem anderen Ausführungsbeispiel kombiniert werden können, außer wenn dies aus Gründen der Kompatibilität ausgeschlossen ist.

Schließlich wird noch darauf hingewiesen, dass in den Ansprüchen und in der Beschreibung der Singular den Plural einschließt, außer wenn sich aus dem Zusammenhang etwas anderes ergibt. Insbesondere wenn der unbestimmte Artikel verwendet wird, ist sowohl der Singular als auch der Plural gemeint.

## Patentansprüche

1. Umrichter (9) für den Austausch von Energie zwischen einem Versorgernetz (1) und einer Endstelle (10, 14, 26) mit:
- netzseitigen Anschlüssen und endstellenseitigen Anschlüssen;
- einer zwischen den netzseitigen Anschlüssen und den endstellenseitigen Anschlüssen geschalteten Wandlereinheit (25), durch die Wirkleistung oder Blindleistung in das Versorgernetz (1) angebbar oder beziehbar ist;
- einer die Wandlereinheit (25) in Abhängigkeit von der Netzspannung steuernden Steuereinheit (27), durch die ein Sollzusammenhang (17, 21) zwischen Netzspannung und Blindleistung in Abhängigkeit von einer Netzimpedanz des Versorgernetzes (1) einstellbar ist;
- der Sollzusammenhang (17, 21) zwischen Netzspannung und Wirkleistung oder Blindleistung um eine Nennspannung einen mittleren Spannungsbereich (18) aufweist, in dem die Zunahme der bezogenen oder eingespeisten Wirkleistung oder Blindleistung pro betragsmäßiger Zunahme der Spannungsabweichung von der Nennspannung kleiner ist als außerhalb des mittleren Spannungsbereiches (18),
**dadurch gekennzeichnet, dass** die Ausdehnung des mittleren Spannungsbereiches (18) von der Netzimpedanz abhängt, und dass die Grenze, bei der die Regelung der Umrichter (9) einsetzt, in Abhängigkeit von der Netzimpedanz einstellbar ist. Hieran schließen die ursprüngliche Ansprüchen 2 bis 11 unverändert an,

2. Umrichter nach Anspruch 1,
**dadurch gekennzeichnet, dass**
der Sollzusammenhang (17, 21) zwischen Netzspannung und Wirkleistung oder Blindleistung einen Bereich (18) ohne Einflussnahme aufweist, dessen Grenzen von der Netzimpedanz abhängen.

3. Umrichter nach Anspruch 1 oder 2,
der Umrichter für die Übertragung von Energie von einem Energieerzeuger (10, 14) in das Versorgernetz (1) eingerichtet ist.

4. Umrichter nach Anspruch 3,
**dadurch gekennzeichnet, dass**
von der Wandlereinheit (25) Wirkleistung in das Versorgernetz (1) abgebbar und Blindleistung aus dem Versorgernetz (1) beziehbar oder abgebbar ist.

5. Umrichter nach einem der Ansprüche 1 bis 4,
**dadurch gekennzeichnet, dass**
die Wandlereinheit (25) zur Übertragung von Energie aus einer Gleichstromquelle (10, 14) in das Versorgernetz (1) eingerichtet ist.

6. Umrichter nach Anspruch 5,
**dadurch gekennzeichnet, dass**
die Wandlereinheit (25) für die Übertragung von Energie aus einer photovoltaischen Vorrichtung (10, 14) in das Versorgernetz (1) eingerichtet ist.

7. Umrichter nach Anspruch 1 oder 2,
**dadurch gekennzeichnet, dass**
die Wandlereinheit (25) für die Übertragung von Energie aus einem Versorgernetz (1) an einen Energieverbraucher eingerichtet ist.

8. Umrichter nach Anspruch 7,
**dadurch gekennzeichnet, dass**
durch die Wandlereinheit (25) Wirkleistung aus dem Versorgernetz (1) beziehbar ist und Blindleistung aus dem Versorgernetz (1) beziehbar oder in das Versorgernetz (1) abgebbar ist.

9. Umrichter nach einem der Ansprüche 1 bis 8,
**dadurch gekennzeichnet, dass**
durch die Steuereinheit (27) die Impedanz des Versorgernetzes (1) bestimmbar ist.

10. Umrichter nach einem der Ansprüche 1 bis 9,
**dadurch gekennzeichnet, dass**
der Sollzusammenhang (17, 21) zwischen Netzspannung und Wirkleistung oder Blindleistung in Abhängigkeit vom Betrag der Netzimpedanz einstellbar ist.

11. Umrichter nach einem der Ansprüche 1 bis 10,
**dadurch gekennzeichnet, dass** die Wandlereinheit (25) ein Vierquadrant-Wechselrichter ist.

12. Steuerverfahren für einen zwischen einem Versorgernetz (1) und einer Endstelle (10, 14, 26) geschalteten Umrichter (9), bei dem der Bezug oder die Abgabe von Wirkleistung oder Blindleistung in Abhängigkeit von der Netzspannung durch eine Steuereinheit (27) gesteuert wird, von der eine zwischen Versorgernetz (1) und Endstelle (10, 14, 26) geschaltete Wandlereinheit (25) unter Berücksichtigung eines von einer Netzimpedanz des Versorgernetzes (1) abhängigen Sollzusammenhangs zwischen Netzspannung und Blindleistung mit Steuersignalen beaufschlagt wird, wobei der Sollzusammenhang (17, 21) zwischen Netzspannung und Wirkleistung oder Blindleistung um eine Nennspannung einen mittleren Spannungsbereich (18) aufweist, in dem die Zunahme der bezogenen oder eingespeisten Wirkleistung oder Blindleistung pro betragsmäßiger Zunahme der Spannungsweichung von der Nennspannung kleiner ist als außerhalb des mittleren Spannungsbereiches (18),
dadurch gekenntzeichnet, dass die Ausdehnung des mittleren Spannungsbereiches (18) in Abhängigkeit von der Netzimpedanz eingestellt wird, wobei die Grenze, bei der die Regelung der Umrichter (9) einsetzt, in Abhängigkeit von der Netzimpedanz eingestellt wird.
Hieran schließen die ursprünglichen Ansprüche 13 bis 21 an.

13. Steuerverfahren nach Anspruch 12,
**dadurch gekennzeichnet, dass**
der Sollzusammenhang einen Bereich (18) ohne Einflussnahme aufweist, dessen Grenzen in Abhängigkeit von der Netzimpedanz eingestellt werden.

14. Steuerverfahren nach Anspruch 12 oder 13,
**dadurch gekennzeichnet, dass**
von der Steuereinheit (27) eine Wandlereinheit (25) gesteuert wird, durch die Energie von einem Energieerzeuger (10, 14, 26) in das Versorgernetz (1) übertragen wird.

15. Steuerverfahren nach Anspruch 12 oder 13,
**dadurch gekennzeichnet, dass**
von der Steuereinheit (27) eine Wandlereinheit (25) gesteuert wird, durch die Energie von dem Versorgernetz (1) an einen Energieverbraucher übertragen wird.

16. Steuerverfahren nach einem der Ansprüche 12 bis 15,
**dadurch gekennzeichnet, dass**
Wirkleistung entsprechend der erforderlichen Übertragungsrichtung für die Übertragung von Energie übertragen wird.

17. Steuerverfahren nach einem der Ansprüche 13 bis 16,
**dadurch gekennzeichnet, dass**
Blindleistung aus dem Versorgernetz (1) bezogen wird, wenn die Netzspannung einen vorbestimmten Grenzwert überschreitet.

18. Steuerverfahren nach einem der Ansprüche 13 bis 16,
**dadurch gekennzeichnet, dass**
Blindleistung in das Versorgernetz (1) abgegeben wird, wenn die Netzspannung einen vorbestimmten Grenzwert unterschreitet.

19. Steuerverfahren nach einem der Ansprüche 12 bis 18,
**dadurch gekennzeichnet, dass**
von der Steuereinheit (27) die Impedanz des Versorgernetzes (1) bestimmt wird.

20. Steuerverfahren nach einem der Ansprüche 12 bis 19,
**dadurch gekennzeichnet, dass** der Sollzusammenhang (17, 21) zwischen Netzspannung und Wirkleistung oder Blindleistung in Abhängigkeit vom Betrag der Netzimpedanz bestimmt wird.

21. Steuerverfahren nach einem der Ansprüche 12 bis 20,
**dadurch gekennzeichnet, dass**
ein Vierquadrant-Wechselrichter von der Steuereinheit (27) mit Steuersignalen beaufschlagt wird.

## Claims

1. Converter (9) for the interchange of energy between a supply network (1) and a terminal (10, 14, 26), comprising:
- network-sided connections and terminal-sided connections;
- a transformer unit (25) coupled between the network-sided connections and the terminal-sided connections, by means of which active power or reactive power can be output to the supply network (1) or can be input;
- a control unit (27) controlling the transformer unit (25) as a function of the network voltage, by means of which a rated interrelation (17, 21) between network voltage and reactive power can be adjusted as a function of a network impedance of the supply network (1);
- the rated interrelation (17, 21) between network voltage and active power or reactive power has an average voltage range (18) about a nominal voltage, wherein the increase of the input or fed active power or reactive power per amount of increase of the voltage deviation from the nominal voltage is smaller than beyond the average voltage range (18),
**characterized in that**
the extent of the average voltage range (18) depends on the network impedance, and **in that** the limit, where converter (9) control begins, can be adjusted as a function of the network impedance.

2. Converter according to claim 1, **characterized in that** the rated interrelation (17, 21) between network voltage and active power or reactive power has a range (18) without influences, with the limits of said range depending on the network impedance.

3. Converter according to claim 1 or 2, the converter is configured for the transmission of energy from an energy generator (10, 14) to the supply network (1).

4. Converter according to claim 3, **characterized in that** from the transformer unit (25) active power can be output to the supply network (1) and reactive power can be input from the supply network (1) or can be output.

5. Converter according to any of claims 1 to 4, **characterized in that** the transformer unit (25) is configured for the transmission of energy from a direct current source (10, 14) to the supply network (1).

6. Converter according to claim 5, **characterized in that** the transformer unit (25) is configured for the transmission of energy from a photovoltaic device (10, 14) to the supply network (1).

7. Converter according to claim 1 or 2, **characterized in that** the transformer unit (25) is configured for the transmission of energy from a supply network (1) to an energy consumer.

8. Converter according to claim 7, **characterized in that** by means of the transformer unit (25) active power can be input from the supply network (1) and reactive power can be input from the supply network (1) or can be output to the supply network (1).

9. Converter according to any of claims 1 to 8, **characterized in that** by means of the control unit (27) the impedance of the supply network (1) can be determined.

10. Converter according to any of claims 1 to 9, **characterized in that** the rated interrelation (17, 21) between network voltage and active power or reactive power can be adjusted as a function of the amount of the network impedance.

11. Converter according to any of claims 1 to 10, **characterized in that** the transformer unit (25) is a four-quadrant inverter.

12. Control method for a converter (9) coupled between a supply network (1) and a terminal (10, 14, 26), wherein input or output of active power or reactive power is controlled as a function of the network voltage by a control unit (27), said control unit applying control signals to a transformer unit (25) coupled between supply network (1) and terminal (10, 14, 26), in consideration of a rated interrelation between network voltage and reactive power depending on a network impedance of the supply network (1), wherein the rated interrelation (17, 21) between network voltage and active power or reactive power has an average voltage range (18) about a nominal voltage, wherein the increase of the input or fed active power or reactive power per amount of increase of the voltage deviation from the nominal voltage is smaller than beyond the average voltage range (18),
**characterized in that**
the extent of the average voltage range (18) is adjusted as a function of the network impedance, wherein the limit, where converter (9) control begins, is adjusted as a function of the network impedance.

13. Control method according to claim 12, **characterized in that** the rated interrelation has a range (18) without influences, and the limits of said range are adjusted as a function of the network impedance.

14. Control method according to claim 12 or 13, **characterized in that** a transformer unit (25) is controlled by the control unit (27), whereby energy is transmitted from an energy generator (10, 14, 26) to the supply network (1).

15. Control method according to claim 12 or 13, **characterized in that** a transformer unit (25) is controlled by the control unit (27), whereby energy is transmitted from the supply network (1) to an energy consumer.

16. Control method according to any of claims 12 to 15, **characterized in that** active power is transmitted corresponding to the required transmission direction for the transmission of energy.

17. Control method according to any of claims 13 to 16, **characterized in that** reactive power is input from the supply network (1), if the network voltage exceeds a predetermined limit value.

18. Control method according to any of claims 13 to 16, **characterized in that** reactive power is output to the supply network (1), if the network voltage falls below a predetermined limit value.

19. Control method according to any of claims 12 to 18, **characterized in that** the impedance of the supply network (1) is determined by the control unit (27).

20. Control method according to any of claims 12 to 19, **characterized in that** the rated interrelation (17, 21) between network voltage and active power or reactive power is determined as a function of the amount of the network impedance.

21. Control method according to any of claims 12 to 20, **characterized in that** control signals are applied to a four-quadrant inverter by the control unit (27).

## Revendications

1. Convertisseur (9) pour l'échange d'énergie entre un réseau d'alimentation (1) et un terminal (10, 14, 26), comprenant :
- des raccordements côté réseau et des raccordements côté terminal ;
- une unité de transformateur (25) couplée entre les raccordements côté réseau et les raccordements côté terminal, par le biais de ladite unité puissance active ou puissance réactive peut être rendue au réseau d'alimentation (1) ou reçue ;
- une unité de commande (27) commandant l'unité de transformateur (25) en fonction de la tension de réseau, par le biais de ladite unité une interrelation cible (17, 21) entre tension de réseau et puissance réactive peut être ajustée en fonction d'une impédance de réseau du réseau d'alimentation (1) ;
- l'interrelation cible (17, 21) entre tension de réseau et puissance active ou puissance réactive présente une plage de tension (18) moyenne autour d'une tension nominale, dans laquelle plage l'augmentation de la puissance active ou puissance réactive reçue ou alimentée par montant d'augmentation de la déviation de tension de la tension nominale est inférieure que en dehors de la plage de tension (18) moyenne,
**caractérisé en ce que**
l'étendue de la plage de tension (18) moyenne dépend de l'impédance de réseau, et **en ce que** la limite à laquelle commence la régulation des convertisseurs (9), peut être ajustée en fonction de l'impédance de réseau.

2. Convertisseur selon la revendication 1, **caractérisé en ce que** l'interrelation cible (17, 21) entre tension de réseau et puissance active ou puissance réactive présente une plage (18) sans influences, les limites de ladite plage dépendant de l'impédance de réseau.

3. Convertisseur selon la revendication 1 ou 2, le convertisseur est configuré pour la transmission d'énergie d'un générateur d'énergie (10, 14) au réseau d'alimentation (1).

4. Convertisseur selon la revendication 3, **caractérisé en ce que** de l'unité de transformateur (25) puissance active peut être rendue au réseau d'alimentation (1) et puissance réactive peut être reçue du réseau d'alimentation (1) ou peut être rendue.

5. Convertisseur selon l'une quelconque des revendications 1 à 4, **caractérisé en ce que** l'unité de transformateur (25) est configurée pour la transmission d'énergie d'une source de courant continu (10, 14) au réseau d'alimentation (1).

6. Convertisseur selon la revendication 5, **caractérisé en ce que** l'unité de transformateur (25) est configurée pour la transmission d'énergie d'un dispositif photovoltaïque (10, 14) au réseau d'alimentation (1).

7. Convertisseur selon la revendication 1 ou 2, **caractérisé en ce que** l'unité de transformateur (25) est configurée pour la transmission d'énergie d'un réseau d'alimentation (1) à un consommateur d'énergie.

8. Convertisseur selon la revendication 7, **caractérisé en ce que** par le biais de l'unité de transformateur (25) puissance active peut être reçue du réseau d'alimentation (1) et puissance réactive peut être reçue du réseau d'alimentation (1) ou rendue au réseau d'alimentation (1).

9. Convertisseur selon l'une quelconque des revendications 1 à 8, **caractérisé en ce que** par le biais de l'unité de commande (27) l'impédance du réseau d'alimentation (1) peut être déterminée.

10. Convertisseur selon l'une quelconque des revendications 1 à 9, **caractérisé en ce que** l'interrelation cible (17, 21) entre tension de réseau et puissance active ou puissance réactive peut être ajustée en fonction du montant de l'impédance de réseau.

11. Convertisseur selon l'une quelconque des revendications 1 à 10, **caractérisé en ce que** l'unité de transformateur (25) est un onduleur à quatre quadrants.

12. Procédé de commande pour un convertisseur (9) couplé entre un réseau d'alimentation (1) et un terminal (10, 14, 26), l'entrée ou la sortie de puissance active ou puissance réactive étant commandée en fonction de la tension de réseau par le biais d'une unité de commande (27), ladite unité de commande fournissant des signaux de commande à une unité de transformateur (25) couplée entre réseau d'alimentation (1) et terminal (10, 14, 26) en tenant compte d'une interrelation cible entre tension de réseau et puissance réactive dépendant d'une impédance de réseau du réseau d'alimentation (1), l'interrelation cible (17, 21) entre tension de réseau et puissance active ou puissance réactive présentant une plage de tension (18) moyenne autour d'une tension nominale, dans laquelle plage l'augmentation de la puissance active ou puissance réactive reçue ou alimentée par montant d'augmentation de la déviation de tension de la tension nominale est inférieure que en dehors de la plage de tension (18) moyenne,
**caractérisé en ce que**
l'étendue de la plage de tension (18) moyenne est ajustée en fonction de l'impédance de réseau, la limite à laquelle commence la régulation des convertisseurs (9) étant ajustée en fonction de l'impédance de réseau.

13. Procédé de commande selon la revendication 12, **caractérisé en ce que** l'interrelation cible présente une plage (18) sans influences, les limites de ladite plage étant ajustée en fonction de l'impédance de réseau.

14. Procédé de commande selon la revendication 12 ou 13, **caractérisé en ce que** par le biais de l'unité de commande (27) une unité de transformateur (25) est commandée pour la transmission d'énergie d'un générateur d'énergie (10, 14, 26) au réseau d'alimentation (1).

15. Procédé de commande selon la revendication 12 ou 13, **caractérisé en ce que** par le biais de l'unité de commande (27) une unité de transformateur (25) est commandée pour la transmission d'énergie du réseau d'alimentation (1) à un consommateur d'énergie.

16. Procédé de commande selon l'une quelconque des revendications 12 à 15, **caractérisé en ce que** puissance active est transmise correspondant à la direction de transmission exigée pour la transmission d'énergie.

17. Procédé de commande selon l'une quelconque des revendications 13 à 16, **caractérisé en ce que** puissance réactive est reçue du réseau d'alimentation (1), si la tension de réseau surpasse une valeur limite prédéterminée.

18. Procédé de commande selon l'une quelconque des revendications 13 à 16, **caractérisé en ce que** puissance réactive est rendue au réseau d'alimentation (1), si la tension de réseau baisse inférieur à une valeur limite prédéterminée.

19. Procédé de commande selon l'une quelconque des revendications 12 à 18, **caractérisé en ce que** par le biais de l'unité de commande (27) l'impédance du réseau d'alimentation (1) est déterminée.

20. Procédé de commande selon l'une quelconque des revendications 12 à 19, **caractérisé en ce que** l'interrelation cible (17, 21) entre tension de réseau et puissance active ou puissance réactive est déterminée en fonction du montant de l'impédance de réseau.

21. Procédé de commande selon l'une quelconque des revendications 12 à 20, **caractérisé en ce qu'**un onduleur à quatre quadrants est fourni de signaux de commande par l'unité de commande (27).
